(19) Europäisches Patentamt
European Patent Office
Office européen des brevets

(11) EP 2 272 357 B1

(12) # EUROPÄISCHE PATENTSCHRIFT

(45) Veröffentlichungstag und Bekanntmachung des Hinweises auf die Patenterteilung:
**09.05.2012 Patentblatt 2012/19**

(51) Int Cl.:
***A01N 47/38*** (2006.01) ***A01N 43/82*** (2006.01)

(21) Anmeldenummer: **10183205.3**

(22) Anmeldetag: **10.09.2002**

(54) **Herbizide enthaltend substituierte Thien-3-yl-Sulfonylamino(thio)carbonyltriazolin(thi)one und Flurtamone**

Herbicides based on substituted thien-3-yl-sulfonylamino(thio)carbonyl-triazolin(thi)ones and flurtamone

Herbicides à base de thien-3-yl-sulfonylamino(thio)carbonyl-triazolin(thi)ones substitués et de flurtamone

(84) Benannte Vertragsstaaten:
**AT BE BG CH CY CZ DE DK EE ES FI FR GB GR IE IT LI LU MC NL PT SE SK TR**
Benannte Erstreckungsstaaten:
**RO SI**

(30) Priorität: **21.09.2001 DE 10146591**

(43) Veröffentlichungstag der Anmeldung:
**12.01.2011 Patentblatt 2011/02**

(62) Dokumentnummer(n) der früheren Anmeldung(en) nach Art. 76 EPÜ:
**02772283.4 / 1 429 612**

(73) Patentinhaber: **Bayer CropScience AG**
**40789 Monheim (DE)**

(72) Erfinder:
- **Feucht, Dieter**
  **65760, Eschborn (DE)**
- **Dahmen, Peter**
  **41470, Neuss (DE)**
- **Drewes, Mark**
  **40764, Langenfeld (DE)**
- **Pontzen, Rolf**
  **42799, Leichlingen (DE)**
- **Gesing, Ernst**
  **40699, Erkrath (DE)**

(56) Entgegenhaltungen:
**WO-A-01/05788**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 272 357 B1

## Beschreibung

Die Erfindung betrifft neue herbizide, synergistische Wirkstoffkombinationen, die bekannte substituierte Thien-3-yl-sulfonylamino(thio)carbonyl-triazolin(thi)one einerseits und eine bekannte herbizid wirksame Verbindungen andererseits und gegebenenfalls zusätzlich eine die Kulturpflanzen-Verträglichkeit verbessernde Verbindung enthalten und mit besonders gutem Erfolg zur Unkrautbekämpfung in verschiedenen Nutzpflanzenkulturen oder auch zur Bekämpfung von monokotylen und dikotylen Unkräutern im semi- und nicht-selektiven Bereich verwendet werden können.

Substituierte Thien-3-yl-sulfonylamino(thio)carbonyl-triazolin(thi)one sind als wirksame Herbizide bekannt (vgl. WO-A-01/05788). Die Wirkung dieser Verbindungen ist jedoch nicht unter allen Bedingungen ganz zufriedenstellend.

Überraschenderweise wurde nun gefunden, dass eine Reihe von Wirkstoffen aus der Reihe der substituierten Thien-3-yl-sulfonylamino(thio)carbonyl-triazolin(thi)one bei gemeinsamer Anwendung mit bestimmten herbizid wirksamen Verbindungen synergistische Effekte hinsichtlich der Wirkung gegen Unkräuter zeigen und besonders vorteilhaft als breit wirksame Kombinationspräparate zur selektiven Bekämpfung von monokotylen und dikotylen Unkräutern in Nutzpflanzenkulturen, wie z.B. in Baumwolle, Gerste, Kartoffeln, Mais, Raps, Reis, Roggen, Soja, Sonnenblumen, Weizen, Zuckerrohr und Zuckerrüben, aber auch zur Bekämpfung von monokotylen und dikotylen Unkräutern im semi- und nicht-selektiven Bereich verwendet werden können.

Gegenstand der Erfindung sind herbizide Mittel, gekennzeichnet durch einen wirksamen Gehalt an einer Wirkstoffkombination bestehend aus

(a) einem substituierten Thien-3-yl-sulfonylamino(thio)carbonyltriazolin(thi)on der allgemeinen Formel (I)

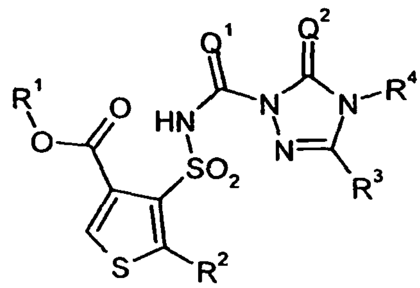

**(I)**

in welcher

$Q^1$ für O (Sauerstoff) steht,
$Q^2$ für O (Sauerstoff) steht,
$R^1$ für Methyl steht
$R^2$ für Methyl steht,
$R^3$ für Methoxy steht,
$R^4$ für Methyl steht,

- sowie Salze der Verbindungen der Formel (I) -
("Wirkstoff der Gruppe 1")
und

(b) Wirkstoff der Gruppe 2: 5-Methylamino-2-phenyl-4-(3-trifluormethyl-phenyl)-3(2H)-furanon (Flurtamone), und gegebenenfalls zusätzlich

(c) eine die Kulturpflanzen-Verträglichkeit verbessernde Verbindung aus der folgenden Gruppe von Verbindungen:

4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet-mexyl), $\alpha$-(Cyanomethoximino)-phenylacetonitril (Cyometrinil), 2,4-Dichlor-phenoxy-essigsäure (2,4-D), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Daimuron, Dymron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyloxazolidin (Furilazole, MON-13900), Ethyl-4,5-dihydro-5,5-diphenyl-3-isoxazolcarboxylat (Isoxadifen-ethyl), (4-Chlor-2-methyl-phenoxy)-essigsäure (MCPA), (+-)-2-(4-Chlor-2-methyl-phenoxy)-propansäure (Mecoprop), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2,5-trimethyl-oxazolidin (R-29148), N-Cyclopropyl-4-[[(2-methoxy-5-methyl-benzoyl)-amino]-sulfonyl]-benzamid, N-[[(4-Methoxyacetylamino)-phenyl]-sulfonyl]-2-methoxy-benzamid und N-[[(4-Methylaminocarbonylamino)-phenyl]-sulfonyl]-2-methoxy-benzamid (letztere jeweils bekannt aus WO-A-99/66795)

("Wirkstoffe der Gruppe 3").

Als bevorzugte Wirkstoff-Komponenten der Gruppe 1 sind insbesondere auch die Natrium-, Kalium-, Magnesium-, Calcium-, Ammonium-, $C_1$-$C_4$-Alkyl-ammonium-, Di-($C_1$-$C_4$-alkyl)-ammonium-, Tri-($C_1$-$C_4$-alkyl)-ammonium-, Tetra-($C_1$-$C_4$-alkyl)-ammonium, Tri-($C_1$-$C_4$-alkyl)-sulfonium-, $C_5$- oder $C_6$-Cycloalkyl-ammonium- und Di-($C_1$-$C_2$-alkyl)-benzyl-ammonium-Salze von Verbindungen der Formel (I), in welcher $Q^1$, $Q^2$, $R^1$, $R^2$, $R^3$ und $R^4$ die oben angegebenen Bedeutungen haben, hervorzuheben.

Die erfindungsgemäße Wirkstoff-Komponente der Formel (I) ist in der nachstehenden Tabelle 1 aufgeführt. Auch das Natriumsalz der Verbindung 1-2, sei als erfindungsgemäße Wirkstoff-Komponente ganz besonders hervorgehoben.

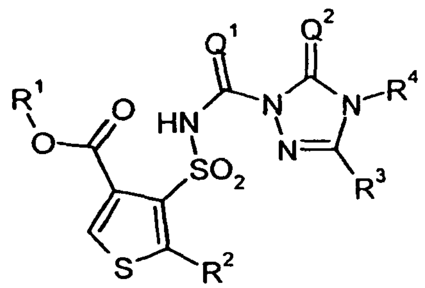

(I)

Tabelle 1: Beispiele für die Verbindungen der Formel (I)

| Bsp.-Nr. | $Q^1$ | $Q^2$ | $R^1$ | $R^2$ | $R^3$ | $R^4$ | Schmelzpunkt (°C) |
|---|---|---|---|---|---|---|---|
| I-2 | O | O | $CH_3$ | $CH_3$ | $OCH_3$ | $CH_3$ | 201 |

Die erfindungsgemäßen Mittel enthalten, gegebenenfalls einen Wirkstoff der Gruppe 3.

Die erfindungsgemäße Kombinationen ist nachstehend in Tabelle 2 aufgeführt.

Tabelle 2: fü Kombination bestehend aus dem Wirkstoff der Gruppe 1 und Flurtamone (ggf. zusätzlich mit Safener)

| Wirkstoff der Gruppe 1 | Wirkstoff der Gruppe 2 |
|---|---|
| (I-2) | Flurtamone |

Es wurde nun überraschend gefunden, dass die vorstehend definierten Wirkstoffkombinationen aus dem Thien-3-yl-sulfonylamino(thio)carbonyl-triazolin-(thi)on der Formel (I) und/oder seinen Salzen und dem vorstehend angeführten Wirkstoff der Gruppe 2 bei sehr guter Nutzpflanzen-Verträglichkeit eine besonders hohe herbizide Wirksamkeit aufweisen und in verschiedenen Kulturen, vor allem in Baumwolle, Gerste, Kartoffeln, Mais, Raps, Reis, Roggen, Soja, Sonnenblumen, Weizen, Zuckerrohr und Zuckerrüben, insbesondere in Gerste, Mais, Reis und Weizen, zur selektiven Bekämpfung von monokotylen und dikotylen Unkräutern verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (I) 0,001 bis 1000 Gewichtsteile, vorzugsweise 0,002 bis 500 Gewichtsteile und besonders bevorzugt 0,01 bis 100 Gewichtsteile Wirkstoff der Gruppe 2.

Als Mischungskomponenten aus den Wirkstoffen der Gruppe 3 werden besonders hervorgehoben:

5-Chlor-chinoxalin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl) besonders geeignet zur Verbesserung der Verträglichkeit in Gerste und Weizen sowie in gewissem Umfang auch in Mais und Reis, sowie 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 3-Dichloracetyl-5-(2-furanyl)-2,2-dimethyl-oxazolidin (Furilazole, MON-13900) und 3-Dichloracetyl-2,2,5-trimethyl-oxazolidin (R-29148), besonders geeignet zur Verbesserung der Verträglichkeit in Mais.

Es ist als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe 3 geeignet sind, die schädigende Wirkung von Wirkstoffen der Formel (I) und deren Salzen, gegebenenfalls auch in Kombination dem oben angeführten Wirkstoff der Gruppe 2, auf die Kulturpflanzen annähernd vollständig aufzuheben, ohne dabei die herbizide Wirksamkeit gegenüber den Unkräutern zu beeinträchtigen.

Überraschenderweise wurde zudem gefunden, dass auch die herbizid wirksame Substanz 2,4-Dichlorophenoxy-essigsäure (2,4-D) und ihre Derivate die oben beschriebene Safeneraufgabe übernehmen können.

Eine bevorzugte Ausführungsform ist daher auch eine Mischung enthaltend eine Verbindung der Formel (I) und/oder deren Salze einerseits und 2,4-D und/oder dessen Derivate andererseits, gegebenenfalls in Kombination mit dem oben angeführten Wirkstoff der Gruppe 2. Typische Derivate von 2,4-D sind z.B. deren Ester.

Überraschenderweise wurde ebenfalls gefunden, dass auch die herbizid wirksamen Substanzen (4-Chlor-2-methylphenoxy)essigsäure (MCPA) und (+-)-2-(4-Chlor-2-methylphenoxy)propansäure (Mecoprop) eine Safeneraufgabe übernehmen können. Die genannten Verbindungen sind in den folgenden Patentanmeldungen beschrieben: JP 63 072 605 und GB 00 820 180.

Die Verbindungen Diethyl-1-(2,4-dichlorophenyl)-4,5-dihydro-5-methyl-1H-pyrazole-3,5-dicarboxylate (Mefenpyr-diethyl), (1-Methyl-hexyl)-[(5-chloro-8-quinolinyl)oxy]-acetate (Cloquintocet-mexyl) und Ethyl-1-(2,4-dichlorophenyl)-5-(trichloromethyl)-1H-1,2,4-triazole-3-carboxylate (Fenchlorazole-ethyl) sind in den folgenden Patentanmeldungen beschrieben: DE-A-39 39 503, EP- A-191 736 bzw. DE-A-35 25 205. 2,4-D ist ein bekanntes Herbizid.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (I) oder dessen Mischungen mit Wirkstoffen der Gruppe 2 0,001 bis 1000 Gewichtsteile, vorzugsweise 0,01 bis 100 Gewichtsteile und besonders bevorzugt 0,1 bis 10 Gewichtsteile einer der oben unter (c) genannten, die Kulturpflanzen Verträglichkeit verbessernden Verbindungen (Antidots/Safener).

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei

Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. ALS-, 4-HPPD-, EPSP- und/oder PPO-Hemmstoffe tolerieren, wie z.B. Acuron-Pflanzen.

Die erfindungsgemäßen Wirkstoffe können z.B. bei den folgenden Pflanzen verwendet werden:

Dikotyle Unkräuter der Gattungen: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäß zu verwendenden Wirkstoffkombinationen können sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige,

körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent an Wirkstoffen, vorzugsweise zwischen 0,5 und 90 %.

Die erfindungsgemäßen Wirkstoffkombinationen werden im Allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol" ) oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

X = % Schädigung durch Herbizid A (Wirkstoff der Formel I) bei p kg/ha Aufwandmenge

und

Y = % Schädigung durch Herbizid B (Wirkstoff der Formel II) bei q kg/ha Aufwandmenge

und

E = die erwartete Schädigung der Herbizide A und B bei p und q kg/ha Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die zu erwartende Wirkung für eine gegebene Kombination dreier Herbizide kann ebenfalls der oben angegebenen Literatur entnommen werden.

**Anwendungsbeispiele:**

**Beispiel A**

Post-emergence-Test / Gewächshaus

Testpflanzen werden unter kontrollierten Bedingungen (Temperatur und Licht) herangezogen. Sobald die Pflanzen eine Wuchshöhe von 5 bis 15 cm erreicht haben, wird die Testsubstanz bzw. die Kombination der Testsubstanzen in der Weise aufgespritzt, dass die jeweils gewünschten Wirkstoffmengen pro Flächeneinheit ausgebracht werden. Die Konzentration der Spritzbrühe wird so gewählt, dass in 500 Liter Wasser/ha die jeweils gewünschten Wirkstoffmengen ausgebracht werden.
Nach der Spritzanwendung werden die Pflanzgefäße im Gewächshaus bei konstanten Licht- und Temperaturbedingungen untergebracht.
Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)
100 % = totale Vernichtung

Wirkstoffe, Aufwandmengen, Testpflanzen und Resultate gehen aus den nachfolgenden Tabellen hervor.
a.i. steht darin für "active ingredient" (Wirkstoff).

**Tabelle A-1-58**

| | Aufw.-menge g ai/ha | Bromus secalinus beobachtet | Bromus secalinus errechnet* |
|---|---|---|---|
| I-2 | 2 | 70 | |
| Flurtamone | 60 | 30 | |
| I-2 + Flurtamone | 2+60 | 95 | 79 |
| * Werte errechnet nach Colby | | | |

**Tabelle A-1-59**

| | Aufw.-menge g ai/ha | Matricaria inodora beobachtet | Matricaria inodora errechnet* |
|---|---|---|---|
| I-2 | 2 | 80 | |
| Flurtamone | 30 | 30 | |
| I-2 + Flurtamone | 2+30 | 95 | 86 |
| * Werte errechnet nach Colby | | | |

**Patentansprüche**

**1.** Mittel, enthaltend eine Wirkstoffkombination bestehend aus:

a) der Verbindung der Formel (I)

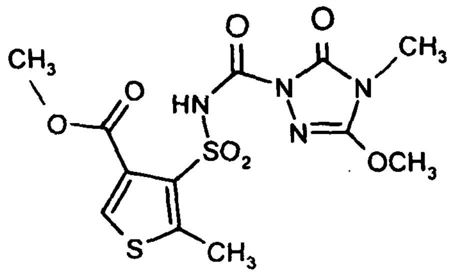

(I)

- sowie Salze der Verbindung der Formel (I) -
und
b) als weiterer Herbizidverbindung 5-Methylamino-2-phenyl-4-(3-trifluormethyl-phenyl)-3(2H)-furanon (Flurtamone).

und wobei auf 1 Gewichtsteil des Wirkstoffs der Formel (I) 0.002 bis 500 Gewichtssteile des unter (b) genannten Wirkstoffs Flurtamone entfallen.

2. Mittel gemäß Anspruch 1, wobei auf 1 Gewichtsteil des Wirkstoffs der Formel (I) auf 0.01 bis 100 Gewichtssteile des Wirkstoffs Flurtamone entfallen.

3. Verwendung eines Mittels nach Anspruch 1 oder 2 zur Bekämpfung von unerwünschten Pflanzen.

4. Verfahren zur Bekämpfung von unerwünschten Pflanzen, **dadurch gekennzeichnet, dass** man Mittel nach Anspruch 1 oder 2 auf die unerwünschten Pflanzen und/oder ihren Lebensraum einwirken lässt.

5. Verfahren zur Herstellung eines herbiziden Mittels, **dadurch gekennzeichnet, dass** man ein Mittel nach Anspruch 1 oder 2 mit oberflächenaktiven Mitteln und/oder Streckmitteln vermischt.

## Claims

1. Composition comprising an active compound combination composed of:

a) the compound of the formula (I)

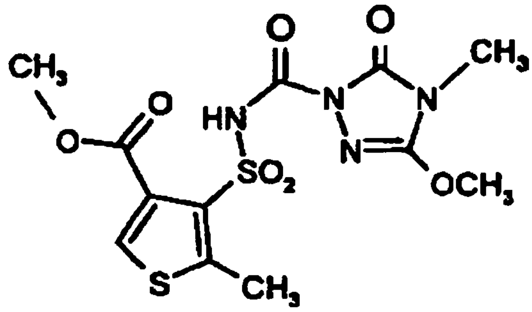

(I)

- and salts of the compound of the formula (I) -
and
b) as further herbicide compound 5-methylamino-2-phenyl-4-(3-trifluoromethylphenyl)-3-(2H)-furanone (flurtamone)

and where, to 1 part by weight of the active compound of the formula (I), there are 0.002 to 500 parts by weight of the active compound flurtamone stated under (b).

2. Composition according to Claim 1, where, for 1 part by weight of the active compound of the formula (I), there are

0.01 to 100 parts by weight of the active compound flurtamone.

**3.** Use of a composition according to Claim 1 or 2 for controlling unwanted plants.

**4.** Method for controlling unwanted plants, **characterized in that** a composition according to Claim 1 or 2 is allowed to act on the unwanted plants and/or their habitat.

**5.** Process for preparing a herbicidal composition, **characterized in that** a composition according to Claim 1 or 2 is mixed with surfactants and/or extenders.

### Revendications

**1.** Agent contenant une combinaison de principes actifs constituée :

a) du composé de la formule (I)

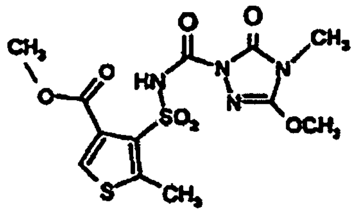

(I)

ainsi que de sels du composé de la formule (I)
et
b) comme autre composé herbicide de la 5-méthylamino-2-phényl-4-(3-trifluorométhyl-phényl)-3-(2H)-furanone (flurtamone)

et dans lequel on compte pour une partie en masse du principe actif de la formule (I) de 0,002 à 500 parties en masse du principe actif de flurtamone cité sous (b).

**2.** Agent selon la revendication 1, dans lequel on compte pour 1 partie en masse du principe actif de la formule (I) de 0,01 à 100 parties en masse du principe actif de flurtamone.

**3.** Utilisation d'un agent selon la revendication 1 ou 2 pour combattre des plantes non désirées.

**4.** Procédé pour combattre des plantes non désirées, **caractérisé en ce que** l'on laisse agir l'agent selon la revendication 1 ou 2 sur les plantes non désirées et/ou sur leur biôtope.

**5.** Procédé pour la préparation d'un agent herbicide, **caractérisé en ce que** l'on mélange un agent selon la revendication 1 ou 2 avec des tensioactifs et/ou des diluants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0105788 A
- WO 9966795 A
- JP 63072605 A
- GB 00820180 A
- DE 3939503 A
- EP 191736 A
- DE 3525205 A


### In der Beschreibung aufgeführte Nicht-Patentliteratur


- **COLBY, S.R.** Calculating synergistic and antagonistic responses of herbicide combinations. *Weeds,* 1967, vol. 15, 20-22